# EUROPÄISCHE PATENTANMELDUNG

(11) **EP 2 524 837 A2**
(43) Veröffentlichungstag der Anmeldung: **21.11.2012**
(21) Anmeldenummer: 12003906.0
(22) Anmeldetag: 18.05.2012
(51) Int. Cl.: B60M 1/20, E04H 12/22

(54) **Oberleitungsmast**

(30) Priorität: 20.05.2011 DE 102011102706
(71) Anmelder: BICC Holdings GmbH, 81373 München (DE)
(72) Erfinder: Saadat, Homayun, Dipl.-Ing., 80993 München (DE); Feil, Andreas, Dipl.-Ing., 81825 München (DE)
(74) Vertreter: Oppermann, Frank

(57) **Zusammenfassung**

Die Erfindung betrifft einen Oberleitungsmast für die Montage der Oberleitungen von elektrifizierten Bahnen. Der erfindungsgemäße Oberleitungsmast ist ein Metallmast 1, der aus einer oder mehreren Profilen besteht. Das eine oder die mehreren Metallprofile 2 sind derart ausgebildet, dass in das eine oder die mehreren Metallprofile plattenförmige Elemente 8A, 8B, 8C, 8D passend einsetzbar sind. Die plattenförmigen Elemente 8A, 8B, 8C, 8D sind an dem einen oder den mehreren Metallprofilen 2 derart befestigt, dass sie eine zumindest Teile des Mastes umhüllende Verkleidung bilden. Mit den plattenförmigen Elementen 8A, 8B, 8C, 8D, insbesondere Dekorplatten, die unterschiedlich ausgebildet sein können, lässt sich der Mast in seinem äußeren Erscheinungsbild an die Umgebung einfach anpassen. Von Vorteil ist, dass die plattenförmigen Elemente selbst keine Last tragen müssen. Folglich brauchen statische Gesichtspunkte bei der Gestaltung des äußeren Erscheinungsbilds des Masts keine Berücksichtigung finden.

## Beschreibung

Die Erfindung betrifft einen Oberleitungsmast für die Montage der Oberleitungen von elektrifizierten Bahnen.

Masten aus den verschiedensten Werkstoffen sind allgemein bekannt. Die bekannten Masten für die Montage der Oberleitungen von elektrifizierten Bahnen sind im Allgemeinen aus Beton oder Stahl gefertigt. Es sind Oberleitungsmasten bekannt, die aus einem Stahlrohr bestehen, das mit einem Korrosionsschutz versehen ist. Neben der Oberleitung kann der Mast noch weitere Leitungen tragen.

Das äußere Erscheinungsbild der bekannten Oberleitungsmasten wird im Wesentlichen durch die Funktion des Masts als Träger der Oberleitung bestimmt.

Der Erfindung liegt die Aufgabe zugrunde, einen Oberleitungsmast für die Montage der Oberleitungen von elektrifizierten Bahnen zu schaffen, der sich in seinem äußeren Erscheinungsbild an die Umgebung einfach anpassen lässt.

Die Lösung dieser Aufgabe erfolgt erfindungsgemäß mit den Merkmalen des Patentanspruchs 1. Vorteilhafte Ausführungsformen der Erfindung sind die Gegenstand der Unteransprüche.

Der erfindungsgemäße Oberleitungsmast ist ein Metallmast, der aus einem oder mehreren Profilen besteht. Das eine oder die mehreren Metallprofile sind derart ausgebildet, dass in das eine oder die mehreren Metallprofile plattenförmige Elemente passend einsetzbar sind. Die plattenförmigen Elemente sind an dem einen oder den mehreren Metallprofilen derart befestigt, dass sie eine zumindest Teile des Masts umhüllende Verkleidung bilden.

Der erfindungsgemäße Oberleitungsmast lässt sich in seinem äußeren Erscheinungsbild an die Umgebung dadurch einfach anpassen, dass plattenförmige Elemente unterschiedlicher Ausbildung in das eine oder die mehreren Metallprofile eingesetzt werden. Damit wird eine Verkleidung für zumindest Teile des einen oder der mehreren Metallprofile geschaffen, die das äußere Erscheinungsbild des Masts bestimmt.

Von Vorteil ist, dass die plattenförmigen Elemente selbst keine Last tragen müssen. Die Last wird allein von dem einen oder den mehreren Metallprofilen des Masts getragen. Die auftretenden Torsions-, Biege- und Zugbeanspruchungen durch die an den Masten angebauten Teile werden also nur über die Metallkonstruktion abgefangen. Folglich brauchen statische Gesichtspunkte bei der Gestaltung des äußeren Erscheinungsbilds des Masts keine Berücksichtigung finden.

Die plattenförmigen Elemente können unterschiedlich ausgebildet sein. Vorzugsweise sind die plattenförmigen Elemente als Dekorplatten ausgebildet. Die Dekorplatten können Oberflächen in schwarz oder weiß oder farbige Oberflächen aufweisen. Auch können die Dekorplatten mit grafischen Elementen versehen sein. Die grafischen Elemente können auf die Platten aufgedruckt sein. Auch können die plattenförmigen Elemente durch eine bestimmte Struktur der Oberfläche individuell gestaltet werden. Beispielsweise sind Gravuren oder dergleichen möglich. Neben Platten aus Kunststoff oder Glas sind auch Platten aus glasähnlichen Kunststoffen, bspw. Acrylglas möglich. Auch ist die Einlage von Holzplatten möglich. Insofern stehen dem Designer die unterschiedlichsten Gestaltungsmöglichkeiten zur Verfügung.

Die plattenförmigen Elemente sind vorzugsweise Kunststoffplatten, die eine ausreichende Witterungsbeständigkeit aufweisen. Auch können die plattenförmigen Elemente Glasplatten sein.

Grundsätzlich ist es unerheblich, wie die plattenförmigen Elemente an dem einen oder den mehreren Metallprofilen befestigt werden. Sie sollten sich aber leicht einsetzen und sicher fixieren lassen. Vorzugsweise sollten sich die plattenförmigen Elemente auch wieder leicht austauschen lassen. Eine bevorzugte Ausführungsform der Erfindung sieht daher vor, dass das eine oder die mehreren Metallprofile rahmenförmige Aufnahmen aufweisen, in die sich die plattenförmigen Elemente leicht einsetzen, sicher fixieren und vorzugsweise auch leicht wieder entnehmen lassen, um sie gegen Elemente mit einer anderen Ausbildung austauschen zu können. Die plattenförmigen Elemente können in den rahmenförmige Aufnahmen beispielsweise lose gefasst, verklebt oder verklemmt werden.

Bei einer bevorzugten Ausführungsform der Erfindung weisen die rahmenförmigen Aufnahmen zwei im rechten Winkel zueinander verlaufende Schenkel auf, die eine Fassung für die plattenförmigen Elemente bilden, in die sich die plattenförmigen Elemente lose einlegen lassen. Die plattenförmigen Elemente können in den rahmenförmigen Aufnahmen verklebt werden. Auch können die plattenförmigen Elemente verschraubt werden. Zur Befestigung stehen dem Fachmann somit sämtliche bekannten Verbindungstechniken zur Verfügung.

Bei einer besonders bevorzugten Ausführungsform werden die plattenförmigen Elemente unter Zwischenlage eines oder mehrerer elastischer Elemente an dem einen oder den mehreren Metallprofilen befestigt. Als elastische Elemente können beispielsweise die bekannten Dichtbänder Verwendung finden. Die Zwischenlage eines Dichtbands ist insbesondere dann von Vorteil, wenn die plattenförmigen Elemente Glasplatten sind, die an dem einen oder den mehreren Metallprofilen spannungsfrei befestigt werden müssen.

Eine alternative Ausführungsform sieht vor, dass die rahmenförmigen Aufnahmen zwei parallele Schenkel aufweisen, die eine Fassung für die plattenförmigen Elemente bilden, in die sich die plattenförmigen Elemente lose einschieben lassen. Bei dieser Ausführungsform sind weitere Verbindungsmittel nicht erforderlich. Es besteht grundsätzlich nicht die Gefahr des Verspannens der plattenförmigen Elemente.

Eine weitere bevorzugte Ausführungsform sieht eine Beleuchtung der plattenförmigen Elemente vor. Bei dieser Ausführungsform weisen die rahmenförmigen Aufnahmen für die plattenförmigen Elemente Beleuchtungselemente auf. Die Beleuchtungselemente weisen vorzugsweise eine oder mehrere Leuchtdioden (LED) auf. Vorzugsweise weisen die Beleuchtungselemente eine Reihe von Leuchtdioden auf, die an der den Kanten der plattenförmigen Elemente zugewandten Seiten der rahmenförmigen Aufnahmen angeordnet sind. Damit ist es möglich, bei der Verwendung von transparenten plattenförmigen Elementen, bspw. Glasplatten oder Acrylplatten, die plattenförmigen Elemente von der Seite zu beleuchten, ohne dass die Beleuchtungselemente sichtbar sind. Damit erscheinen die plattenförmigen Elemente als selbstleuchtende Platten.

Der Mast selbst besteht vorzugsweise aus nur einem Profil. Es ist aber auch möglich, mehrere Profile miteinander zu verbinden, beispielsweise zu verschrauben. Das Metallprofil ist vorzugsweise ein Stahlprofil. Das eine oder die mehreren Metallprofile können unterschiedliche Querschnitte aufweisen. Beispielsweise können die Metallprofile rund, oval oder eckig sein.

Um den Umfang des einen oder der mehreren Metallprofile können mehrere rahmenförmige Aufnahmen vorgesehen sein. Auch über die Länge des einen oder der mehreren Metallprofile können mehrere rahmenförmige Aufnahmen vorgesehen sein. Dadurch lässt sich der Mast von allen Seiten optisch in verschiedene Segmente gliedern.

Eine besonders bevorzugte Ausführungsform der Erfindung sieht ein oder mehrere Metallprofile mit einem rechteckförmigen Querschnitt vor, wobei die rahmenförmigen Aufnahmen für die plattenförmigen Befestigungselemente an allen vier Seiten vorgesehen sind.

Eine weitere besonders bevorzugte Ausführungsform der Erfindung sieht ein Metallprofil mit einem rechteckförmigen Querschnitt vor, das an den Ecken vier Profilabschnitte aufweist, die über Stege miteinander verbunden sind. Bei dieser besonders bevorzugten Ausführungsform können die Stege mit den plattenförmigen Elementen verkleidet werden, so dass von außen nur die Ecken der vier Profilabschnitte sichtbar sind.

Im Folgenden werden zwei Ausführungsbeispiele der Erfindung unter Bezugnahme auf die Zeichnungen näher erläutert.

Es zeigen:
- Fig. 1: eine Seitenansicht eines Ausführungsbeispiels des Masts in vereinfachter schematischer Darstellung,
- Fig. 2: einen Schnitt durch den Mast von Fig. 1 und
- Fig. 3: eine alternative Ausführungsform des Masts in geschnittener Darstellung.

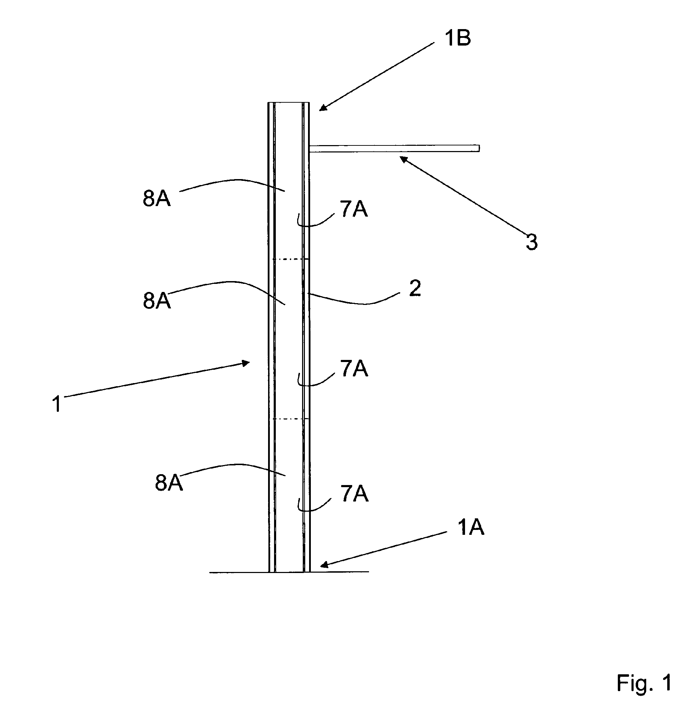

Fig. 1 zeigt ein Ausführungsbeispiel des erfindungsgemäßen Masts für die Montage der Oberleitung einer elektrifizierten Bahn in der Seitenansicht. Der Mast 1 weist bei dem vorliegenden Ausführungsbeispiel ein durchgehendes Metallprofil 2 auf, das sich vom Mastfuß 1A bis zum Mastkopf 1B verjüngt. Folglich ist der Mastfuß 1A entsprechend der Belastung breiter ausgeführt als die Mastspitze 1B. Die Verjüngung beträgt bei dem Ausführungsbeispiel etwa 1 %. Es ist aber auch möglich, dass der Mast über die gesamte Höhe einen gleichbleibenden Querschnitt aufweist. Das Metallprofil ist vorzugsweise ein Stahlprofil 2.

Unterhalb des Mastkopfes 1B ist an dem Metallprofil 2 ein nur schematisch dargestellter Ausleger 3 befestigt, an dem die nicht dargestellte Oberleitung hängt.

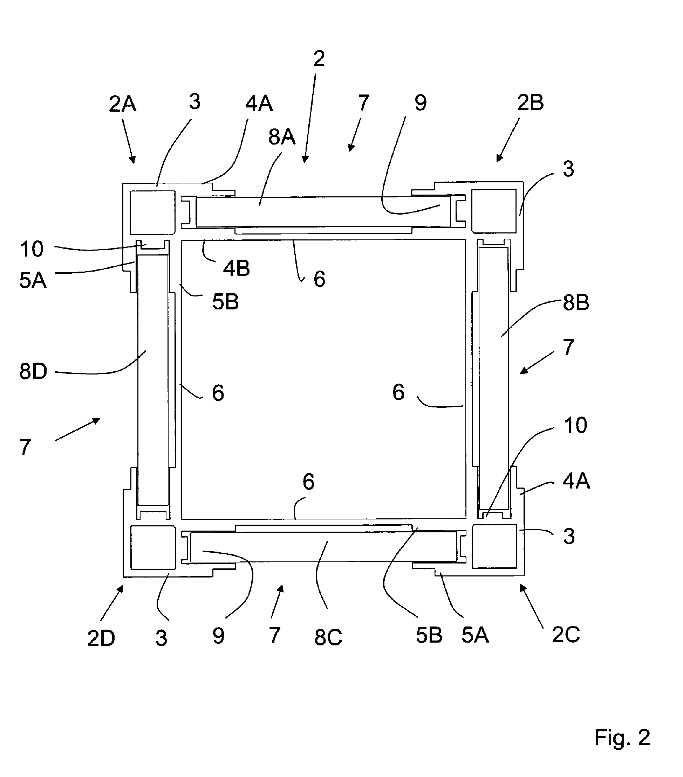

Fig. 2 zeigt einen Schnitt durch das Metallprofil 2 des Masts 1. Bei dem vorliegenden Ausführungsbeispiel weist das Metallprofil 2 einen rechteckförmigen Querschnitt auf. Das rechteckförmige Metallprofil 2 weist an den Ecken Profilabschnitte 2A, 2B, 2C, 2D auf, die jeweils den gleichen Querschnitt haben. Die vier Profilabschnitte 2A - 2D weisen jeweils einen rechteckigen Hohlprofilabschnitt 3 auf. An zwei benachbarten Seiten der rechteckförmigen Hohlprofilabschnitte 3 sind an die Hohlprofilabschnitten jeweils ein äußerer Schenkel 4A und ein innerer Schenkel 4B bzw. 5A und 5B angeformt, die jeweils im Abstand zueinander angeordnet sind. Die inneren Schenkel 4B bzw. 5B der Eckprofilabschnitte 3 sind jeweils über Stege 6 miteinander verbunden.

Die Eckprofilabschnitte 2A - 2D des Metallprofils 2 bilden rahmenförmige Aufnahmen 7 für plattenförmige Elemente 8A - 8D. Bei dem vorliegenden Ausführungsbeispiel weist der Mast an allen vier Seiten jeweils eine rahmenförmige Aufnahme 8A - 8D auf. Die parallel zueinander angeordneten Schenkel 4A, 4B bzw. 5A, 5B der Eckprofilabschnitte 2A - 2D bilden dabei eine seitliche Fassung 9, so dass sich die plattenförmigen Elemente 8A - 8D in die rahmenförmigen Aufnahmen 7A - 7D einschieben lassen. Die plattenförmigen Elemente 8A - 8D haben in den Aufnahmen ausreichend Spiel, so dass sie nicht verspannt werden.

Bei dem vorliegenden Ausführungsbeispiel sind die plattenförmigen Elemente bspw. Kunststoffplatten oder Glasplatten, die an der Außenseite mit einem in den Figuren nicht dargestellten Dekor versehen sind.

Fig. 1 zeigt, dass an einer Seite mehrere rahmenförmige Aufnahmen 7A übereinander angeordnet sind, wobei in jede rahmenförmige Aufnahme eine Dekorplatte 8A eingeschoben ist. Die übereinander angeordneten Dekorplatten 8A können unterschiedliche Oberflächen aufweisen, so dass sich der Mast 1 über die Höhe in mehrere Segmente optisch gliedern lässt.

Der Mast 1 sieht bei dem vorliegenden Ausführungsbeispiel eine Beleuchtung der Dekorplatten vor. An den Seiten der Eckprofilabschnitte 2A - 2D, die den Kanten der Dekorplatten 8A - 8D zugewandt sind, sind jeweils eine Reihe von Leuchtdioden 10 über die Länge des Metallprofils 2 verteilt angeordnet. Die LED-Beleuchtung kann von nur einer Seite oder beiden Seiten der transparenten Dekorplatten erfolgen. Eine derartige LED-Beleuchtung ist als Leuchtband bekannt. In Fig. 2 sind die LED-Bänder 10 nur andeutungsweise dargestellt.

Die zur Stromversorgung der LED-Bänder 10 erforderlichen Leitungen, die in Fig. 2 nicht dargestellt sind, können beispielsweise über die Profilabschnitte 2A - 2D geführt werden. Mit den LED-Bändern können die Dekorplatten, die vorzugsweise transparent sind, illuminiert werden. Es ist auch möglich, durch entsprechende Beleuchtung der transparenten Dekorplatten eine Lichtsignalanlage zu schaffen.

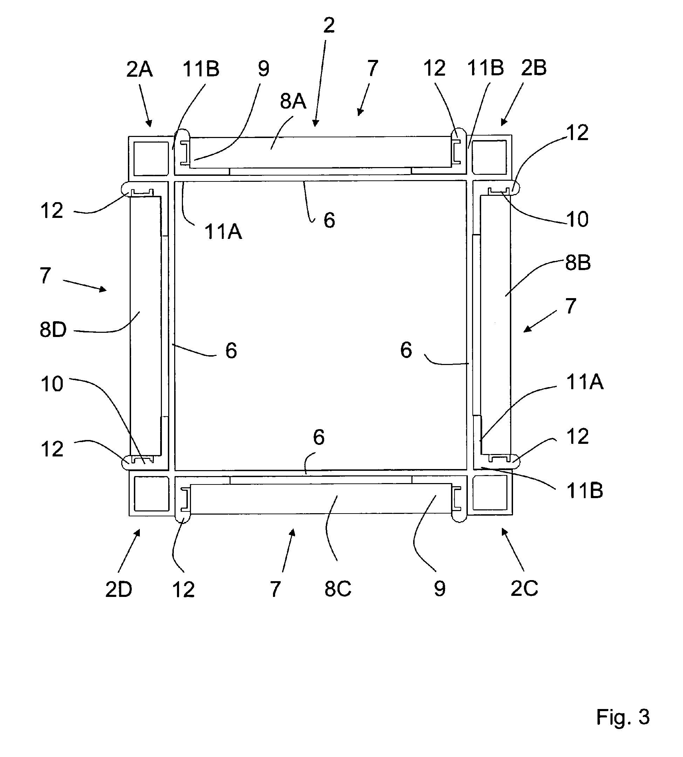

Fig. 3 zeigt eine alternative Ausführungsform des Masts, die sich von der unter Bezugnahme auf die Fig. 2 beschriebene Ausführungsform dadurch unterscheidet, dass die Dekorplatten 8A - 8D nicht lose in die rahmenförmigen Aufnahmen 7A - 7D eingeschoben sind, sondern in die rahmenförmigen Aufnahmen eingelegt und dann verklebt sind. Die einander entsprechenden Teile sind mit den gleichen Bezugszeichen versehen.

Bei dem Ausführungsbeispiel von Fig. 3 weisen die rahmenförmigen Aufnahmen 7A - 7D jeweils zwei im rechten Winkel zueinander verlaufende Schenkel 11A, 11B auf, von denen die einen Schenkel 11 A von den die Eckprofilabschnitte 2A - 2D verbindenden Stegen 6 und der anderen Schenkel 11B von den einander gegenüberliegenden Seiten der Eckprofilabschnitte 2A - 2D gebildet werden. Mit den beiden Schenkeln 11A, 11B der Eckprofilabschnitte 2A - 2D sind jeweils längslaufende elastische Elemente 12, insbesondere Gummiprofile, verklebt, die einen L-förmigen Querschnitt haben. Die Dekorplatten 8A - 8D sind wiederum mit den Gummiprofilen 12 verklebt. Dadurch werden die Dekorplatten, insbesondere Glasplatten spannungsfrei gehalten.

Auch bei der Ausführungsform von Fig. 3 kann wieder eine LED-Beleuchtung vorgesehen sein, wobei LED-Bänder 10 in die Gummiprofile integriert werden können. In Fig. 3 sind die LED-Bänder 10 nur andeutungsweise dargestellt.

## Patentansprüche

1. Oberleitungsmast für die Montage der Oberleitungen von elektrifizierten Bahnen, der ein oder mehrere Metallprofile aufweist,
**dadurch gekennzeichnet, dass** das eine oder die mehreren Metallprofile (2) derart ausgebildet sind, dass in das eine oder die mehreren Metallprofile plattenförmige Elemente (8A, 8B, 8C, 8D) passend einsetzbar sind, die an dem einen oder den mehreren Metallprofilen derart befestigbar sind, dass die plattenförmige Elemente eine zumindest Teile des Mastes umhüllende Verkleidung bilden.

2. Oberleitungsmast nach Anspruch 1, **dadurch gekennzeichnet, dass** das eine oder die mehreren Metallprofile (2) rahmenförmige Aufnahmen (7A, 7B, 7C, 7D) zum Einsetzen der plattenförmigen Elemente (8A, 8B, 8C, 8D) aufweisen.

3. Oberleitungsmast nach Anspruch 2, **dadurch gekennzeichnet, dass** die rahmenförmigen Aufnahmen (7A, 7B, 7C, 7D) für die plattenförmigen Elemente (8A, 8B, 8C, 8D) zwei im rechten Winkel zueinander verlaufende Schenkel (4A, 4B; 5A, 5B) aufweisen, die eine Fassung (9) für die plattenförmigen Elemente bilden, in die sich die plattenförmigen Elemente (8A, 8B, 8C, 8D) lose einlegen lassen.

4. Oberleitungsmast nach Anspruch 2 oder 3, **dadurch gekennzeichnet, dass** ein oder mehrere elastische Elemente (12) in den rahmenförmigen Aufnahmen (7A, 7B, 7C, 7D) für die plattenförmigen Elemente (8A, 8B, 8C, 8D) vorgesehen sind, so dass die plattenförmigen Elementen unter Zwischenlage des einen oder der mehreren elastischen Elemente an dem einen oder den mehreren Metallprofilen (2) befestigbar ist.

5. Oberleitungsmast nach Anspruch 2, **dadurch gekennzeichnet, dass** die rahmenförmigen Aufnahmen (7A, 7B, 7C, 7D) für die plattenförmigen Elemente (8A, 8B, 8C, 8D) zwei parallele Schenkel (11A, 11B) aufweisen, die eine Fassung (9) für die plattenförmigen Elemente bilden, in die sich die plattenförmigen Elemente (8A, 8B, 8C, 8D) lose einschieben lassen.

6. Oberleitungsmast nach einem der Ansprüche 2 bis 5, **dadurch gekennzeichnet, dass** die rahmenförmigen Aufnahmen (7A, 7B, 7C, 7D) für die plattenförmigen Elemente (8A, 8B, 8C, 8D) Beleuchtungselemente (10) zum Beleuchten der plattenförmigen Elemente aufweisen.

7. Oberleitungsmast nach Anspruch 6, **dadurch gekennzeichnet, dass** die Beleuchtungselemente (10) eine oder mehrere Leuchtdioden aufweisen.

8. Oberleitungsmast nach Anspruch 6 oder 7, **dadurch gekennzeichnet, dass** die Beleuchtungselemente (10) eine Reihe von Leuchtdioden aufweisen, die an der den Kanten der plattenförmigen Elemente (8A, 8B, 8C, 8D) zugewandten Seiten der rahmenförmige Aufnahmen (7A, 7B, 7C, 7D) angeordnet sind.

9. Oberleitungsmast nach einem der Ansprüche 2 bis 8, **dadurch gekennzeichnet, dass** um den Umfang des einen oder der mehreren Metallprofile (2) mehrere rahmenförmige Aufnahmen (7A, 7B, 7C, 7D) für die plattenförmigen Elemente (8A, 8B, 8C, 8D) vorgesehen sind.

10. Oberleitungsmast nach einem der Ansprüche 2 bis 9, **dadurch gekennzeichnet, dass** über die Länge des einen oder der mehreren Metallprofile (2) mehrere rahmenförmige Aufnahmen (7A, 7B, 7C, 7D) für die plattenförmigen Elemente (8A, 8B, 8C, 8D) vorgesehen sind.

11. Oberleitungsmast nach einem der Ansprüche 2 bis 10, **dadurch gekennzeichnet, dass** das eine oder die mehreren Metallprofile (2) einen rechteckförmigen Querschnitt aufweisen, wobei die rahmenförmige Aufnahmen (7A, 7B, 7C, 7D) für die plattenförmigen Elemente (8A, 8B, 8C, 8D) an den vier Seiten der rechteckförmigen Metallprofile (2) vorgesehen sind.

12. Oberleitungsmast nach einem der Ansprüche 2 bis 11, **dadurch gekennzeichnet, dass** ein Metallprofil (2) mit einem rechteckförmigen Querschnitt vorgesehen ist, das an den Ecken Profilabschnitte (2A, 2B, 2C, 2D) aufweist, die über Stege (6) miteinander verbunden sind.

13. Oberleitungsmast nach einem der Ansprüche 1 bis 12, **dadurch gekennzeichnet, dass** die plattenförmigen Elemente (8A, 8B, 8C, 8D) als Dekorplatten ausgebildet sind, die Oberflächen in schwarz oder weiß oder farbige Oberflächen aufweisen oder mit graphischen Elementen versehene Oberflächen aufweisen.

14. Oberleitungsmast nach einem der Ansprüche 1 bis 13, **dadurch gekennzeichnet, dass** die plattenförmigen Elemente (8A, 8B, 8C, 8D) Kunststoffplatten oder Glasplatten sind.

15. Oberleitungsmast nach einem der Ansprüche 1 bis 14, **dadurch gekennzeichnet, dass** die plattenförmigen Elemente (8A, 8B, 8C, 8D) in das eine oder die mehreren Metallprofile (2) eingesetzt sind.
